# EUROPEAN PATENT SPECIFICATION

(11) **EP 3 627 107 B1**
(45) Date of publication and mention of the grant of the patent: **10.01.2024**
(21) Application number: 18195206.0
(22) Date of filing: 18.09.2018
(51) Int. Cl.: G01C 21/34, G01C 21/36

(54) **ROUTE OPTIMIZATION USING STATISTICAL INFORMATION**
ROUTENOPTIMIERUNG MIT STATISTISCHEN INFORMATIONEN
OPTIMISATION DE ROUTE À L'AIDE D'INFORMATIONS STATISTIQUES

(43) Date of publication of application: 25.03.2020
(73) Proprietor: Volvo Car Corporation, 405 31 Göteborg (SE)
(72) Inventor: TIEDJE, Stefan, 44350 Lerum (SE)
(74) Representative: Valea AB

(56) References cited:
- WO-A1-2009/156554
- US-A1- 2014 257 695
- US-B1- 9 432 929

## Description

### TECHNICAL FIELD

The present disclosure relates to assessing one or more navigation routes of a vehicle based on communication criteria.

### BACKGROUND

Many vehicles today comprise Internet connection systems, which by means of e.g. built-in or embedded personal SIM (Subscriber Identity Module) cards, in a commonly known manner support cellular and/or non-cellular communication with access nodes such as base stations. Such Internet connection systems subsequently support vehicle occupant electronic user devices connected thereto, of accessing the Internet. That is, vehicle occupants may be enabled to get online with their user devices, such as e.g. smartphones, with support from said Internet connection systems, while being on-board, riding and/or driving the vehicle(s).

As commonly known in the art, as a vehicle described above travels, the cellular and/or non-cellular communication of the Internet connection system may change from one cell, access node and/or base station to another, e.g. due to the vehicle's updated geographical position. It is further known that communication of the Internet connection system may rely on - and potentially change between - varying radio carriers and/or cellular and/or non-cellular communications networks, such as e.g. commonly known 5G, 4G, 3G, LTE, EDGE, CDMA, GPRS, GSM and/or equivalents or successors thereof, and/or commonly known Wifi networks and/or equivalents or successors thereof.

Cellular and/or non-cellular communication of the vehicle Internet connection system may for shorter or longer periods - and/or in certain geographical areas -be insufficient and/or severed, e.g. due to insufficient signal strength and/or coverage, capacity, the communication network and/or carrier and so forth, with the outcome of no or insufficient bandwidth available to the vehicle Internet connection system. This may result in e.g. streaming on - and/or Internet dependent applications being run on - user devices connected to the Internet connection system, functioning unsatisfying or not at all, which in turn potentially may result in unsatisfying user experience. Not uncommonly, the vehicle and/or Internet connection system may even be unfairly blamed for the inconvenience.

In order to alleviate the foregoing, it may be preferred to - while traveling - prioritize the user experience of the connected vehicle occupant. DE102010004292 A1, for instance, relates to determining a route from a start position to a target position based on navigation information and bandwidth information with respect to a predetermined bandwidth criterion. However, although DE102010004292 A1 supports suggesting vehicle routes which satisfy a required bandwidth criterion, there is still room for improved and/or alternative solutions to enhance the user experience for vehicle occupants utilizing electronic user devices connected to Internet connection systems of vehicles. Documents WO2009/156554 and US2014/257695 disclose the selection of a route amongst several choices based on the quality of the network coverage along the potential routes.

### SUMMARY OF THE INVENTION

It is therefore an object of embodiments herein to provide an approach of in an alternative and/or improved manner assess vehicle navigation routes in view of cellular and/or non-cellular communication of an Internet connection system of a vehicle. The scope of the invention is defined by the method of claim 1 and the system of claim 5.

According to a first aspect of embodiments herein, the object is achieved by a method performed by a vehicle route assessing system for assessing one or more navigation routes of a vehicle in consideration of cellular and/or non-cellular communication of an Internet connection system of the vehicle. The vehicle route assessing system determines - with support from a navigation system of the vehicle - one or more potential vehicle navigation routes from a start position to a target position. The vehicle route assessing system further determines - with support from a remote vehicles management system supporting communication with one or more vehicles - respective predicted bandwidth capacity available to the Internet connection system along one or more route sections of the one or more potential routes. The respective predicted bandwidth capacity is based on statistical bandwidth data derived from previous data gathered by the remote vehicles management system, which previous data indicates previous bandwidth capacities experienced by Internet connection systems comprised in vehicles having previously been positioned along, and/or in vicinity of, the one or more route sections.

Thereby, there is introduced an approach which enables assessment of cellular and/or non-cellular communication conditions for a vehicle's Internet connection system along potential vehicle routes. That is, since it is determined one or more potential vehicle navigation routes from a start position to a target position, there is calculated one or more potential routes for how the vehicle may drive from a start position to a target position. Moreover, that is, since it is determined - with support from a remote vehicles management system supporting communication with one or more vehicles - respective predicted bandwidth capacity available to the Internet connection system along one or more route sections of the one or more potential routes, which respective predicted bandwidth capacity is based on statistical bandwidth data derived from previous data gathered by the remote vehicles management system, which previous data indicates previous bandwidth capacities experienced by Internet connection systems of vehicles having previously been positioned along, and/or in vicinity of, the one or more route sections, there is predicted amount of bandwidth available to the vehicle Internet connection system along the potential routes based on previous bandwidth capacity experiences by vehicle Internet connection systems along and/or near the potential routes communicated via the remote vehicles management system. Accordingly, it may with support from the vehicles management system having gathered bandwidth statistics from one or more vehicles previously having been positioned along and/or in vicinity of the potential navigation routes, be assessed how bandwidth capacity predicted to be available to the Internet connection system along said routes may vary along different route sections of the respective potential routes. Consequently, based on the statistical bandwidth data derived from the previous data collected and potentially processed by the vehicles management system, it may be analysed how predicted bandwidth capacity for one route section of e.g. a first potential route may differ from predicted bandwidth capacity for another route section of said first potential route. Subsequently, based on said statistical bandwidth data derived from the previous data collected and potentially processed by the vehicles management system, it may hence further be analysed how predicted bandwidth capacity along route sections of said first potential route may differ from predicted bandwidth capacity along route sections of a second potential route, etc. Thus, relevant previous bandwidth data may accordingly be gathered by the vehicles management system in an efficient manner, which data subsequently may be utilized for predicting future bandwidth capacities along different potential routes.

For that reason, an approach is provided which in an alternative and/or improved manner assesses vehicle navigation routes in view of cellular and/or non-cellular communication of an Internet connection system of a vehicle.

The technical features and corresponding advantages of the above mentioned method will be discussed in further detail in the following.

By introducing a method performed by a vehicle route assessing system for assessing one or more navigation routes of a vehicle in consideration of cellular and/or non-cellular communication of an Internet connection system of the vehicle, an approach is provided which enables assessment of communication conditions, e.g. with one or more access nodes such as base stations, for a vehicle's Internet connection system along potential vehicle routes. That is, the cellular and/or non-cellular communication of the vehicle Internet connection system may for shorter or longer periods - and/or in certain geographical areas - be insufficient and/or severed, e.g. due to insufficient signal strength and/or coverage, capacity, the communication network and/or carrier and so forth, with the outcome of no or insufficient bandwidth available to the vehicle Internet connection system. The Internet connection system of the vehicle may be represented by any arbitrary commonly known Internet connection system of a vehicle supporting cellular and/or non-cellular communication with access nodes in a known manner, e.g. being represented by and/or comprising a SIM card such as a personal SIM card. The Internet connection system may further in a known manner be adapted such that one or more electronic user devices of vehicle occupants - and/or built-in user devices - may be connected thereto, to thereby support Internet connection for said user device(s), e.g. via Wifi. An electronic user device may refer to any commonly known user device supporting Internet dependent applications, such as e.g. a multi-functional smartphone, a surf plate such as e.g. an iPad, a portable computer, a Pocket PC, a PDA, an iPod and/or successors or equivalents thereof, which may be carried on-board by a vehicle occupant and/or be built into the vehicle. "Vehicle occupant" may refer to any arbitrary person being positioned within the vehicle, such as a potential driver or passenger thereof. "Assessing" one or more navigation routes may refer to "determining", "identifying" and/or "calculating" one or more navigation routes, whereas "vehicle route assessing system" may refer to "vehicle route determining system". "Navigation routes" may refer to "driving routes" and further to "potential navigation routes", whereas "in consideration of" cellular and/or non-cellular communication may refer to "in view of" and/or "based on" cellular and/or non-cellular communication. Moreover, "cellular and/or non-cellular communication" may refer to "radio and/or Wifi communication" and further to "bandwidth capacity", and according to an example, further to merely "communication". "Internet connection system" may refer to "access node connection system" and/or "cell connection system". "An Internet connection system" may further refer to "a personal SIM card" and/or "a personal SIM card system", whereas "of" the vehicle throughout may refer to "comprised in" the vehicle. According to an example, "for assessing one or more navigation routes of a vehicle in consideration of cellular and/or non-cellular communication of an Internet connection system of the vehicle" may refer to "for prioritizing user experience for an occupant of a vehicle with an electronic user device connected to an Internet connection system of said vehicle". The vehicle route assessing system may at least partly be comprised in the vehicle, and further at least partly comprised in - and/or associated with or adapted to communicate directly or indirectly with - a remote vehicles management system supporting communication with one or more vehicles, which vehicles management system will be described in greater detail further on. The referred to "vehicle" may be represented by any arbitrary vehicle, for instance an engine-propelled vehicle, such as e.g. a car, truck, lorry, van, bus, tractor, military vehicle, scooter and/or motorcycle. The vehicle may or may not be at least partly semi-autonomous. Moreover, the vehicle may be adapted to communicate wirelessly with the remote vehicles management system mentioned above.

Since the vehicle route assessing system determines - with support from a navigation system of the vehicle - one or more potential vehicle navigation routes from a start position to a target position, there is calculated one or more potential routes for how the vehicle may drive from a start position to a target position. The one or more routes may be determined in any known manner with support from a navigation system, for instance utilizing positioning - such as e.g. GPS positioning - and map data etc., as known in the art. Said routes may be of arbitrary distance and/or length, e.g. ranging from a few hundred metres up to thousands of kilometres. "Determining" navigation routes may refer to "calculating", "deriving" and/or "identifying" navigation routes, whereas "with support from" may refer to "by means of, "utilizing" and/or "with input from". "Potential" vehicle navigation routes may refer to "drivable", "feasible" and/or "suitable" vehicle navigation routes, whereas "vehicle navigation routes" may refer to "driving routes". Moreover, "start position" may refer to "selected start position", "geographical start position" and/or "start position of said vehicle", and in a similar manner, "target position" may refer to "selected target position", "geographical target position" and/or "target position for said vehicle".

According to an example, "from a start position to a target position" may refer to "having a start position and a target position".

Since the vehicle route assessing system further determines - with support from a remote vehicles management system supporting communication with one or more vehicles - respective predicted bandwidth capacity available to the Internet connection system along one or more route sections of the one or more potential routes, which respective predicted bandwidth capacity is based on statistical bandwidth data derived from previous data gathered by the remote vehicles management system, which previous data indicates previous bandwidth capacities experienced by Internet connection systems of vehicles having previously been positioned along, and/or in vicinity of, the one or more route sections, there is predicted amount of bandwidth available to the vehicle Internet connection system along the potential routes based on previous bandwidth capacity experiences by vehicle Internet connection systems along and/or near the potential routes communicated via the remote vehicles management system. Accordingly, it may with support from the vehicles management system having gathered bandwidth statistics from one or more vehicles previously having been positioned along and/or in vicinity of the potential navigation routes, be assessed how bandwidth capacity predicted to be available to the Internet connection system along said routes may vary along different route sections of the respective potential routes. Consequently, based on the statistical bandwidth data derived from the previous data collected and potentially processed by the vehicles management system, it may be analysed how predicted bandwidth capacity for one route section of e.g. a first potential route may differ from predicted bandwidth capacity for another route section of said first potential route. Subsequently, based on said statistical bandwidth data derived from the previous data collected and potentially processed by the vehicles management system, it may hence further be analysed how predicted bandwidth capacity along route sections of said first potential route may differ from predicted bandwidth capacity along route sections of a second potential route, etc. Thus, relevant previous bandwidth data may accordingly be gathered by the vehicles management system in an efficient manner, which data subsequently may be utilized for predicting future bandwidth capacities along different potential routes.

The result of the predicted bandwidth capacity may be utilized in any arbitrary manner deemed advantageous, and may for instance be presented by means of the navigation system to a potential vehicle occupant in any arbitrary way. For instance, the predicted bandwidth capacity along the one or more route sections - or a mean value thereof - of respective potential route, may be attached to, presented and/or visualized in association with respective potential route e.g. on a navigation display reflecting said routes. Thereby, e.g. a potential vehicle occupant may easily derive what bandwidth capacity each potential route is predicted to support, and may hence for instance judge whether a route which is estimated to be relatively slower but with higher predicted bandwidth capacity is considered worthwhile in comparison to a route which is estimated to be relatively faster but with lower predicted bandwidth capacity.

Gathering by the remote vehicles management system of bandwidth-related previous data from one or more vehicles having previously been positioned along, and/or in vicinity of, the one or more route sections, may be accomplished by said one or more vehicles wirelessly providing said previous data to the vehicles management system, and/or said vehicles management system deriving said previous data from the one or more vehicles, e.g. periodically, upon request and/or upon it being determined that the vehicle(s) is - or has been - positioned along and/or in vicinity of a specific route section. The previous data may be communicated to the vehicles management system in any arbitrary known manner, e.g. with support from one or more cells and/or access nodes. The previous data is in addition to being indicative of a bandwidth capacity experienced by the Internet connection system of the previous vehicle, geo-tagged and/or indicative of a position associated with the experienced bandwidth capacity. Accordingly, previous data from a previous vehicle may hence comprise one or more values and/or ranges of - by the Internet connection system of said vehicle experienced - bandwidth capacity, along with one or more vehicle positions associated therewith. The vehicle position(s) data may further be categorized into, and/or mapped to, a specific road section such as a route section, of a road such as a potential route. By collecting previous data from one or more vehicles with support from the vehicles management system, statistical bandwidth data may be derived therefrom, revealing historical bandwidth availability for vehicle Internet connection systems along different road sections, such as route sections. Deriving the statistical bandwidth data from the previous data may be accomplished in any arbitrary manner considered relevant; different previous data may for instance be weighted in accordance with e.g. relevance and/or broadband measurement reliability, and/or data deemed faulty and/or of low measurement reliability may be excluded. Moreover, different vehicle positions in relative closeness to one another may for instance be grouped together, e.g. representing a common route section.

"Determining" respective predicted bandwidth may refer to "calculating", "estimating" and/or "deriving" respective predicted bandwidth, whereas "with support from" may refer to "by means of, "utilizing" and/or "with input from". The "vehicles management system" supporting communication with one or more vehicles, may refer to "a control system", "a back-end system", "a management system", "one or more services", "one or more functions", "one or more servers", and/or "one or more automotive clouds adapted for cloud-based storage" supporting communication with one or more vehicles. The expression "automotive clouds" may refer to "automotive cloud network" and further to "automotive clouds adapted for storage and/or cloud-based storage and for wirelessly transmitting data to, and/or receiving data from, vehicles". Moreover, the expression "vehicles management system supporting communication with" one or more vehicles, may refer to "vehicles management system adapted to communicate with" one or more vehicles, "vehicles management system adapted for wirelessly transmitting data to and/or receiving data from" one or more vehicles, and/or "vehicles management system supporting wireless communication with" one or more vehicles. Said vehicles management system may for instance refer to a commonly known system adapted to wirelessly communicate with one or more vehicles, remotely control functionality of said vehicles and/or hold information associated with said vehicles; for instance a management and/or assisting system such as e.g. Volvo On Call or an equivalent or successor thereof, and/or a commonly known connected safety system.

"Respective predicted bandwidth capacity" may refer to merely "predicted bandwidth capacity", whereas "bandwidth" capacity may refer to "bandwidth, connectivity, signal strength, network type, carrier, operator, and/or cell coverage" capacity. "Capacity" may refer to "capacities" and/or "capacity and/or capacities". "Available" to the Internet connection system, on the other hand, may refer to "assigned to" the Internet connection system, whereas "along" one or more route sections may refer to "for" one or more route sections. A potential route may comprise - and/or be divided into - any arbitrary number of route sections, e.g. fictive route sections, as deemed and/or determined appropriate and/or feasible; for instance, a route section may be defined by an essentially continuous segment of a potential route for which the predicted bandwidth capacity is deemed and/or determined to be the same, essentially the same, within a predefined capacity range, and/or above a predefined capacity level threshold. One route section may be directly followed by another route section along said potential route, and/or said route sections may be separated by an arbitrary distance. A route section may be of any arbitrary distance and/or length, and may range from a few metres up to tenths of kilometres. Moreover, route "section" may refer to route "segment". "Said" respective predicted bandwidth capacity may refer to "each" respective predicted bandwidth capacity, whereas the respective predicted bandwidth capacity being "based on" statistical bandwidth data may refer to the respective predicted bandwidth capacity being "calculated based on" statistical bandwidth data. "Statistical bandwidth data" may refer to "historical and/or previous bandwidth data", whereas statistical bandwidth data "derived from" previous data may refer to statistical bandwidth data "based on and/or calculated from" previous data. According to an example, "based on statistical bandwidth data derived from previous data" may refer to merely "based on previous data". "Data" may throughout refer to "information", whereas "previous" data may refer to "historical" data. "Previous data" may furthermore refer to "previous bandwidth data" and/or "previous data of one or more vehicles". "Gathered" by the remote vehicle management system may refer to "derived by and/or provided to" the remote vehicles management system, whereas gathered by the "remote vehicles management system" may refer to gathered by the "remote vehicles management system from vehicles previously having been in communication therewith". Moreover, "remote vehicles management system" may refer to merely "vehicles management system". The previous data "indicating" previous bandwidth capacities may refer to the previous data "reflecting" previous bandwidth capacities, whereas "previous" bandwidth capacities may refer to "historical and/or already experienced" bandwidth capacities. Previous "bandwidth" capacities may refer to previous "connectivity" capacities, whereas "bandwidth capacities" may refer to "assigned and/or available bandwidth" and/or "respective bandwidth capacity". "Experienced" may refer to "previously experienced", whereas "experienced by" Internet connection systems may refer to "measured by and/or assigned to" Internet connection systems. Moreover, "Internet connection systems of vehicles" may refer to "an Internet connection system of at least a first vehicle", whereas Internet connection systems "of" vehicles may refer to Internet connection systems "comprised in" vehicles. According to an example, "previous bandwidth capacities experienced by Internet connections systems of vehicles" may refer to "previous bandwidth capacity and/or capacities experienced by an Internet connection system of at least a first vehicle". "Having previously been" positioned along may merely refer to "previously" positioned along, whereas "in vicinity of" the one or more route sections may refer to "within a predetermined distance from and/or in a predetermined area of" the one or more route sections. Such a distance may be of arbitrary quantity, e.g. range from a few metres up to several tenths of kilometres. Similarly, such an area may be of arbitrary shape and/or size considered relevant, and may further for instance be represented by a cell. "Said one or more route sections" may refer to "at least one route section of said one or more route sections".

Optionally, the previous data may comprise information of time of day, day of week and/or date. Thereby, the previous data relating to bandwidth availability gathered by the vehicles management system from Internet connection systems of one or more vehicles having previously been positioned along, and/or in the vicinity of, one or more route sections, is - in addition to indicating experienced bandwidth capacity and geographical vehicle position associated therewith - time-stamped, and/or indicate a time factor. Accordingly, the previous data then reflects at what time, day and/or date a bandwidth capacity for a previous vehicle was measured, which may be of relevance since the bandwidth capacity may vary therewith. That is, available bandwidth capacity for a road section, such as a route section, at e.g. a first time of day, day of week and/or date, may differ from available bandwidth capacity for said road section and/or route section at a second time of day, day of week and/or date, etc. These differing bandwidth capacities may for instance result from varying numbers of simultaneous users of a cell and/or access node along and/or in vicinity of said road section and/or said route section, e.g. the number of vehicles with Internet connection systems being positioned simultaneously along and/or in vicinity thereof, which may vary depending on e.g. whether it is rush hour, weekday or weekend, and/or a national holiday.

Optionally, determining the respective predicted bandwidth capacity discussed above may then comprise determining respective predicted bandwidth capacity along one or more route sections for the one or more potential routes, taking into account time of day, day of week and/or date. Thereby, there is predicted amount of bandwidth available to the vehicle Internet connection system along the potential routes at a specific time of day, day of week and/or date based on previous bandwidth capacity experiences by vehicle Internet connection systems at the same, corresponding, and/or similar time of day, day of week and/or date along and/or near the potential routes communicated via the remote vehicles management system. Accordingly, it may with support from the vehicles management support system having gathered bandwidth statistics from one or more vehicles previously having been positioned along and/or in vicinity of the potential navigation routes, be assessed how bandwidth capacity predicted to be available to the Internet connection system along said routes, may vary along different route sections of the respective potential routes taking into account time of day, day of week and/or date when the vehicle is predicted, calculated and/or determined to potentially be positioned at and/or along the different route sections. Predicted bandwidth capacity for a route section may thus vary depending on when the vehicle is predicted to be positioned at and/or along said route section. That is, predicted bandwidth capacity for a route section, at e.g. a first time of day, day of week and/or date, may hence differ from predicted bandwidth capacity for said route section at a second time of day, day of week and/or date, etc. Consequently, upon determining respective predicted bandwidth capacity along one or more route sections, a time-dependent criteria and/or time factor is considered, for instance whether it is rush hour, weekday or weekend, and/or a national holiday. "Taking into account" time of day, day of week and/or date may refer to "based on and/or calculated based on" time of day, day of week and/or date.

The vehicle route assessing system suggests - out of the one or more potential routes - at least a first route determined to be favourable in view of predicted bandwidth capacity available to the Internet connection system. Thereby, a route is favoured which is deemed to have good and/or the best possible bandwidth capacity for the Internet connection system from the start position to the target position. Subsequently, a route is favoured which is deemed to be preferred in view of user experience for one or more vehicle occupants utilizing electronic user devices connected to the vehicle Internet connection system, when traveling from the start position to the target position. Selecting which potential route(s) that is considered favourable may depend on different parameters, such as e.g. the suggested route comprising one or more route sections with the highest predicted bandwidth capacity as compared to route sections of other potential routes, and/or the route and/or the route sections comprising the highest percentage of relatively high and/or acceptable - such as above a threshold limit - predicted bandwidth capacity, etc., or a combination thereof. "Suggesting" may refer to "selecting", "determining" and/or "estimating", whereas "determined to be favourable" may refer to "deemed and/or estimated to be favourable". Moreover, "favourable" may refer to "advantageous", "preferred" and/or "the best available option", whereas "in view of" predicted bandwidth capacity may refer to "in terms of and/or considering" predicted bandwidth capacity. "Predicted bandwidth capacity available" may refer to "bandwidth capacity and/or capacities predicted to be available".

The vehicle route assessing system visualizes - with support from a digital map of a display of the navigation system - a mapped route reflecting the first route, wherein along the mapped route, the predicted bandwidth capacity and/or capacities available to the Internet connection system for the one or more route sections along the first route, is/are visualized. Thereby, there is displayed a route on the navigation system display representing the suggested first route, along which mapped route there is further displayed predicted bandwidth capacity and/or capacities for the different route sections of the first route. Accordingly, bandwidth capacities predicted to be available to the Internet connection system along the first route are hence visualized in an intuitive manner along the mapped route, and a potential vehicle occupant may hence easily comprehend what bandwidth capacity is predicted to be available where along the suggested first route. Visualizing the predicted bandwidth capacity and/or capacities along the mapped route may be accomplished by means of e.g. colours, signs, symbols, text and/or markings, or combinations thereof, along the mapped route, e.g. indicated continuously or intermittently along sections of the mapped route corresponding to the one or more route sections of the suggested first route. Segments and/or sections of the mapped route corresponding to segments and/or sections of the suggested first route for which predicted bandwidth capacity has not been determined, e.g. due to insufficient previous data, may or may not visually indicate that no bandwidth capacity prediction is available; for instance, visualizing of predicted bandwidth capacity may be left out, or an indication intuitively informing of non-availability of predicted bandwidth capacity may be visualized. The display of the navigation system may refer to any arbitrary, e.g. commonly known, navigation display. The digital map data, on the other hand, may refer to any arbitrary digital map data, e.g. commonly known, which additionally may have been adapted to support visualizing the predicted bandwidth capacity available to the Internet connection system for the one or more route sections along the suggested first route. "Visualizing" a mapped route may refer to "displaying" and/or "presenting" a mapped route, whereas "with support from" a digital map of a display may refer to "using", "with input from" and/or "by means of" a digital map of a display. A "mapped" route may refer to a "visually displayed" route, whereas "reflecting" the first route may refer to "representing" and/or "corresponding to" the first route. "Reflecting the first route" may further refer to "reflecting the one or more route sections of the first route". Moreover, "a" mapped route may refer to "at least a first" mapped route, and correspondingly, "said first route" may refer to "said at least a first route". "Along" the mapped route may refer to "continuously or intermittently along" and/or "where relevant along" the mapped route. Furthermore, "predicted bandwidth capacity available" may refer to "bandwidth capacity predicted to be available", whereas "capacity" may refer to "capacities" and/or "capacity and/or capacities". Is "visualized" may refer to is "displayed", "presented", "visually indicated" and/or "indicated".

Optionally, the predicted bandwidth capacity for the first route may be visualized by displaying different colours and/or types of markings along the mapped route for route sections having different levels of predicted bandwidth capacity. Thereby, the different bandwidth capacities predicted to be available to the Internet connection system along different sections of the suggested first route are hence visualized in an intuitive manner along the mapped route in that different predicted bandwidth capacity is represented by different colours and/or types of markings, and a potential vehicle occupant may hence easily comprehend what bandwidth capacity is predicted to be available where along said first route. That is, the predicted bandwidth capacities may be categorized into different capacity categories, e.g. by being predicted to reach different predetermined levels of bandwidth capacity and/or belong to predetermined different ranges of bandwidth capacity. Such levels and/or ranges may be arbitrarily selected, as deemed suitable and/or feasible. The different bandwidth capacity categories may then accordingly be represented by different colours and/or types of markings along the mapped route; for instance, red colour and/or thin line or dashed line for predicted relatively low bandwidth capacity, yellow and/or line or dashed line of medium thickness for predicted relative medium bandwidth capacity, and green and/or thick line or dashed line for predicted relatively high bandwidth capacity. The colours and/or types of markings may be arbitrary selected as deemed suitable to in an intuitive manner distinguish route sections with different predicted bandwidth capacities - and/or being in different predicted bandwidth capacity ranges and/or being above different predicted bandwidth capacity levels - from one another. That is, any arbitrary colour and/or type of markings may be used. Furthermore, the colour and/or type of markings may be provided any arbitrary distance from the mapped route on the display, ranging from e.g. at least partly overlapping the mapped route, to be provided up to tenths of millimetres distance from the mapped route. According to an example, "route sections having different levels" of predicted bandwidth capacity may refer to "different categories" of predicted bandwidth capacity. "Said first" route may refer to "said at least a first" route, whereas "displaying" different colours and/or types of markings may refer to "visualizing" and/or "providing" different colours and/or types of markings. "Colours" may refer to "colour combinations and/or schemes", whereas "types of markings" may refer to merely "markings". "Markings" may further refer to "markings, signs, and/or symbols, and/or a combination thereof", whereas "along" the mapped route may refer to "continuously and/or intermittently along" the mapped route. "Having" different levels may refer to "reaching", "deemed to have" and/or "determined to have" different levels, whereas "levels" of predicted bandwidth capacity may refer to "ranges" of predicted bandwidth capacity. According to an example, "displaying different colours and/or types of markings along the mapped route for route sections having different levels of predicted bandwidth capacity" may refer to "displaying a first colour and/or a first type of markings along the mapped route for route sections having a first level of predicted bandwidth capacity, and displaying a second colour and/or type of markings along the mapped route for route sections having a second level of predicted bandwidth capacity, etc.".

The vehicle route assessing system visualizes a warning indication upon the vehicle approaching a route section of the first route having a predicted bandwidth capacity below a predetermined level threshold, which warning indication is visualized in association with a segment of the mapped route reflecting that route section. Thereby, when the vehicle is nearing a section of the selected first route having a predicted bandwidth capacity below a level under which the bandwidth capacity is deemed unsatisfying and/or insufficient, a heads-up is provided in an intuitive manner in that said warning indication is displayed in relation to a segment and/or section of the mapped route on the navigation display corresponding to the section of the first route having the predicted low - e.g. insufficient - bandwidth capacity. Subsequently, a potential vehicle occupant may hence easily comprehend when the bandwidth capacity is about to go below a level where streaming on - and/or internet dependent applications being run on - user devices connected to the Internet connection system, may function unsatisfying or not at all. The warning indication may be visualized in any arbitrary manner deemed intuitive, e.g. by means of a text message, and/or e.g. by means of one or more signs and/or symbols in an intuitive manner signaling "warning". The warning indication may further be visualized on the navigation display such that there is a visual connection from the warning indication to the segment of the mapped route reflecting the route section with the predicted bandwidth capacity below the predetermined threshold. The warning indication may be visualized and/or provided a predetermined period of time prior to - and/or a predetermined distance before - the vehicle is estimated to reach the route section having a predicted bandwidth capacity below the predetermined level threshold.

Accordingly, "upon the vehicle approaching" may refer to "a predetermined period of time prior to the vehicle is estimated to reach", where the referred to "predetermined period of time" may be arbitrarily selected, e.g. ranging from several minutes down to a few seconds. Additionally or alternatively, "upon the vehicle approaching" may refer to "a predetermined distance prior to the vehicle is estimated to reach", where the referred to "predetermined distance" may be arbitrarily selected, e.g. ranging from several tenths of kilometres down to a few meters. The predetermined period of time and/or predetermined distance may for instance be pre-set and/or be adjustable e.g. by a vehicle occupant. Estimating arrival time at - and/or distance left to - said route section may be accomplished in any arbitrary manner commonly known in the art, e.g. with support from the navigation system. "Visualizing" may refer to "presenting", "announcing" and/or "providing", whereas "warning indication" may refer to merely "indication". "Level threshold" may refer to "capacity level threshold", and the referred to predetermined level threshold may be arbitrarily selected as deemed appropriate and/or feasible, e.g. pre-set or adjustable e.g. by a vehicle occupant. "Visualized" may refer to "displayed", "presented" and/or "provided", whereas visualized "in association with" a segment may refer to visualized "with a visual connection to" and/or "connected to" a segment. "A segment of" the mapped route may refer to "a section of" and/or "a beginning of a segment of" the mapped route. According to an example, this optional action just described of visualizing a warning indication upon the vehicle approaching a route section of the first route having a predicted bandwidth capacity below a predetermined level threshold, may be preceded by the vehicle route assessing system determining that said first route has been selected.

According to a second aspect of embodiments herein, the object is achieved by a vehicle route assessing system adapted and/or suitable for assessing one or more navigation routes of a vehicle in consideration of cellular and/or non-cellular communication of an Internet connection system of the vehicle. The vehicle route assessing system comprises a routes determining unit adapted and/or suitable for determining - with support from a navigation system of the vehicle - one or more potential vehicle navigation routes from a start position to a target position. The vehicle route assessing system further comprises a bandwidth capacity determining unit adapted and/or suitable for determining - with support from a remote vehicles management system supporting communication with one or more vehicles - respective predicted bandwidth capacity available to the Internet connection system along one or more route sections of the one or more potential routes, which respective predicted bandwidth capacity is based on statistical bandwidth data derived from previous data gathered by the remote vehicles management system, which previous data indicates previous bandwidth capacities experienced by Internet connection systems of vehicles having previously been positioned along, and/or in vicinity of, the one or more route sections.

Optionally, the previous data may comprise information of time of day, day of week and/or date.

Optionally, the bandwidth capacity determining unit may further be adapted for determining respective predicted bandwidth capacity along one or more route sections of the one or more potential routes, taking into account time of day, day of week and/or date.

The vehicle route assessing system comprises a route suggesting unit adapted and/or suitable for suggesting - out of the one or more potential routes - at least a first route determined to be favourable in view of predicted bandwidth capacity available to the Internet connection system.

The vehicle route assessing system further comprises a capacity visualizing unit adapted and/or suitable for visualizing - with support from a digital map of a display of the navigation system - a mapped route reflecting the first route, wherein along the mapped route, the predicted bandwidth capacity available to the Internet connection system for the one or more route sections along the first route, is visualized. Optionally, the capacity visualizing unit may then further be adapted such that the predicted bandwidth capacity of the first route is visualized by displaying different colours and/or types of markings along the mapped route for route sections having different levels of predicted bandwidth capacity.

The vehicle route assessing system further comprises a warning visualizing unit adapted and/or suitable for visualizing a warning indication upon the vehicle approaching a route section of the first route having a predicted bandwidth capacity below a predetermined level threshold, which warning indication is visualized in association with a segment of the mapped route reflecting that route section.

Similar advantages as those mentioned in the foregoing in relation to the first aspect correspondingly apply to the second aspect, which is why these advantages are not further discussed.

According to a third aspect of embodiments herein, the object is achieved by a vehicle comprising a vehicle route assessing system as discussed above. Again, similar advantages as those mentioned in the foregoing in relation to the first aspect correspondingly apply to the third aspect, which is why these advantages are not further discussed.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying vehicle route assessing system according to embodiments of the disclosure;
**Fig. 2** illustrates a schematic view of an exemplifying predicted bandwidth capacity visualization according to embodiments of the disclosure;
**Fig. 3** is a schematic block diagram illustrating an exemplifying vehicle route assessing system according to embodiments of the disclosure;
**Fig. 4** illustrates a schematic view of an exemplifying alternative predicted bandwidth capacity visualization according to embodiments of the disclosure; and
**Fig. 5** is a flowchart depicting an exemplifying method performed by a vehicle route assessing system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to assessing one or more navigation routes of a vehicle in consideration of cellular and/or non-cellular communication of an Internet connection system of said vehicle, there will be disclosed how user experience for vehicle occupants utilizing electronic user devices connected to Internet connection systems of vehicles, may be improved.

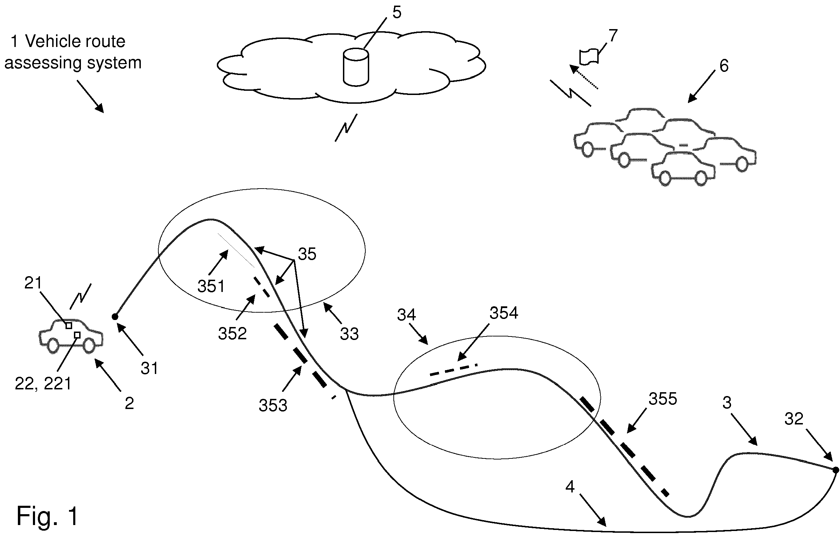

Referring now to the figures and **Fig. 1** in particular, there is depicted a schematic view of an exemplifying **vehicle route assessing system 1** according to embodiments of the disclosure. The vehicle route assessing system 1 is at least partly comprised in a **vehicle 2,** here a passenger car. The vehicle comprises an **Internet connection system 21,** adapted to communicate with cells, access nodes and/or base stations (now shown) to subsequently enable electronic user devices (not shown) connected to the Internet connection system 21 to access the Internet. The vehicle 2 further comprises a **navigation system 22,** which navigation system comprises a **display 221.**

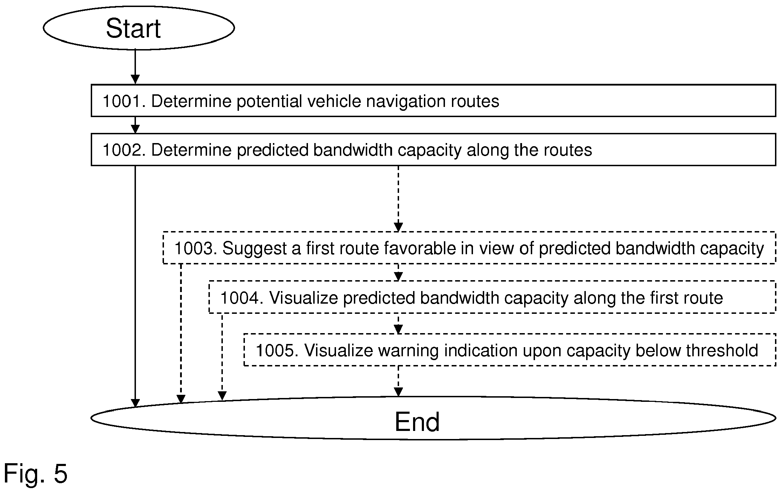

Further displayed in Fig. 1 is an exemplifying **first potential route 3** between a respective exemplifying **start position 31** and **target position 32.** The first potential route 3 passes through a respective exemplifying **rural area 33** and **city 34.** Along the first potential route 3 there is depicted one or more **route sections 35;** here a respective exemplifying **first route section 351, second route section 352, third route section 353, fourth route section 354** and **fifth route section 355.** The first route section 351 is here defined by a continuous segment of the first potential route 3 for which bandwidth capacity predicted to be available to the Internet connection system 21 is within a first capacity range and/or above a first capacity level. Similarly, here, the second route section 352 is defined by a continuous segment of the first potential route 3 for which bandwidth capacity predicted to be available to the Internet connection system 21 is within a second capacity range and/or above a second capacity level. In a similar manner, here, the third route section 353 is defined by a continuous segment of the first potential route 3 for which bandwidth capacity predicted to be available to the Internet connection system 21 is within a third capacity range and/or above a third capacity level. Similarly, here, the fourth route section 354 is defined by a continuous segment of the first potential route 3 for which bandwidth capacity predicted to be available to the Internet connection system 21 is within the second capacity range and/or above the second capacity level, and the fifth route section 355 is here defined by a continuous segment of the first potential route 3 for which bandwidth capacity predicted to be available to the Internet connection system 21 is within the third capacity range and/or above the third capacity level. The first capacity range and/or capacity level is here the lowest of the three, the second capacity range and/or capacity level in the middle of the three, and the third capacity range and/or capacity level the highest of the three. For illustrative purposes, for better understanding of the exemplifying different predicted bandwidth capacities along the different route sections 35, the respective route sections 351, 352, 353, 354, 355 have been marked out using dashed lines of different thickness; a thin dashed line for the first route section 351 representing a route section with predicted relatively low bandwidth capacity, a dashed line of medium thickness for the second and fourth route sections 352, 354 representing route sections with predicted relative medium bandwidth capacity, and a thick dashed line for the third and fifth route sections 353, 355 representing route sections with predicted relatively high bandwidth capacity. The predicted bandwidth capacity discussed above and determination thereof will be explained in further detail in conjunction with Fig. 5.

Further shown is an exemplifying **second potential route 4** originating in the start position 31 and ending in the target position 32. Fig. 1 further illustrates a **vehicles management system 5** supporting communication with one or more **vehicles 6**. The one or more vehicles 6 may include the vehicle denoted "2". Also shown is how **previous data 7** may be gathered from the one or more vehicles 6 by the vehicles management system 5.1

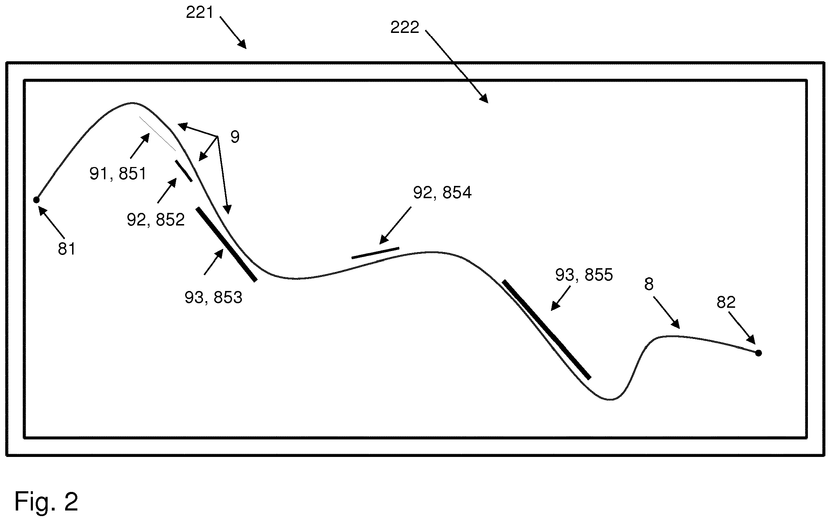

**Fig. 2** illustrates a schematic view of an exemplifying predicted bandwidth capacity visualization according to embodiments of the disclosure. A **mapped route 8** is shown with support from a **digital map 222** of the display 221 of the navigation system 22, and the mapped route 8 here reflects the first route 3 illustrated in Fig. 1. Further shown in Fig. 2 is a **mapped start position 81** reflecting the start position 31 of the first route 3, and a **mapped target position 82** reflecting the target position 32 of the first route 3.

Along the mapped route 8 of Fig. 2, the bandwidth capacity and/or capacities predicted to be available to the Internet connection system 21 for the one or more route sections 35 along the first route 3, is visualized. The predicted bandwidth capacity of the first route 3 may be visualized by displaying different colours along the mapped route 8 for route sections 35 having different levels of predicted bandwidth capacity; for instance, red colour for predicted relatively low bandwidth capacity, yellow for predicted relative medium bandwidth capacity, and green for predicted relatively high bandwidth capacity. In Fig. 2, however, the predicted bandwidth capacity of the first route 3 is visualized by displaying different **types of markings 9** along the mapped route 8 for route sections 35 having different levels of predicted bandwidth capacity. Here, an exemplifying **first type of markings 91** is visualized along a **first mapped route section 851** reflecting predicted bandwidth capacity along the first route section 351 of the first route 3, an exemplifying **second type of markings 92** is visualized along a **second mapped route section 852** reflecting predicted bandwidth capacity along the second route section 352 of the first route 3, and an exemplifying **third type of markings 93** is visualized along a **third mapped route section 853** reflecting predicted bandwidth capacity along the third route section 353 of the first route 3. Additionally, there is depicted the second type of markings 92 along a **fourth mapped route section 854** reflecting predicted bandwidth capacity along the fourth route section 354 of the first route 3, and the third type of markings 93 along a **fifth mapped route section 855** reflecting predicted bandwidth capacity along the fifth route section 355 of the first route 3. The first type of markings 91 is here represented by an exemplifying thin line intuitively indicating predicted relatively low bandwidth capacity, the second type of markings 92 is here represented by an exemplifying line of medium thickness intuitively indicating predicted relative medium bandwidth capacity, and the third type of markings 93 is here represented by an exemplifying thick line intuitively indicating predicted relatively high bandwidth capacity.

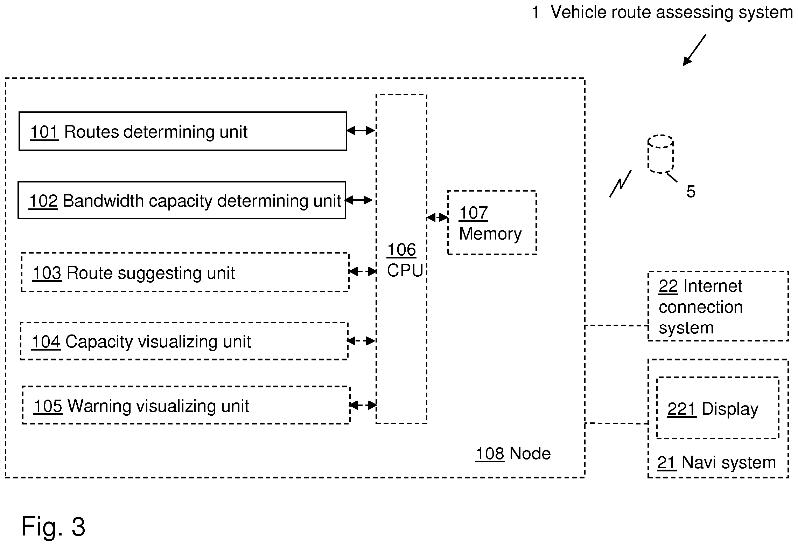

As further shown in **Fig. 3****,** which is a schematic block diagram illustrating an exemplifying vehicle route assessing system 1 according to embodiments of the disclosure, the vehicle route assessing system 1 comprises a **routes determining unit 101,** a **bandwidth capacity determining unit 102,** an optional **route suggesting unit 103,** an optional **capacity visualizing unit 104** and an optional **warning visualizing unit 105,** all of which will be described in greater detail in conjunction with Fig. 5. Furthermore, the embodiments herein for assessing one or more navigation routes 3, 4 of a vehicle 2 in consideration of cellular and/or non-cellular communication of an Internet connection system 21 of the vehicle 2, may be implemented through one or more processors, such as a **processor 106,** here denoted CPU, together with computer program code for performing the functions and actions of the embodiments herein. Said program code may also be provided as a computer program product, for instance in the form of a data carrier carrying computer program code for performing the embodiments herein when being loaded into the vehicle route assessing system 1. One such carrier may be in the form of a CD ROM disc. It is however feasible with other data carriers such as a memory stick. The computer program code may furthermore be provided as pure program code on a server and downloaded to the vehicle route assessing system 1. The vehicle route assessing system 1 may further comprise a **memory 107** comprising one or more memory units. The memory 107 may be arranged to be used to store e.g. information, and further to store data, configurations, schedulings, and applications, to perform the methods herein when being executed in the vehicle route assessing system 1. For instance, the computer program code may be implemented in the firmware, stored in FLASH memory 107, of an embedded processor 106.

Furthermore, the routes determining unit 101, the bandwidth capacity determining unit 102, the optional route suggesting unit 103, the optional capacity visualizing unit 104 and the optional warning visualizing unit 105, the optional processor 106 and/or the optional memory 107 may at least partly be comprised in the vehicle 2 - for instance in one or more **nodes 108** thereof such as electronic control units (ECUs). Those skilled in the art will also appreciate that said units 100, 101, 102, 103, 104, 105 described above, and which will be described in more detail later on in this description, may refer to a combination of analog and digital circuits, and/or one or more processors configured with software and/or firmware, e.g. stored in a memory such as the memory 107, that when executed by the one or more processors such as the processor 106 perform as will be described in more detail in conjunction with Fig. 5. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

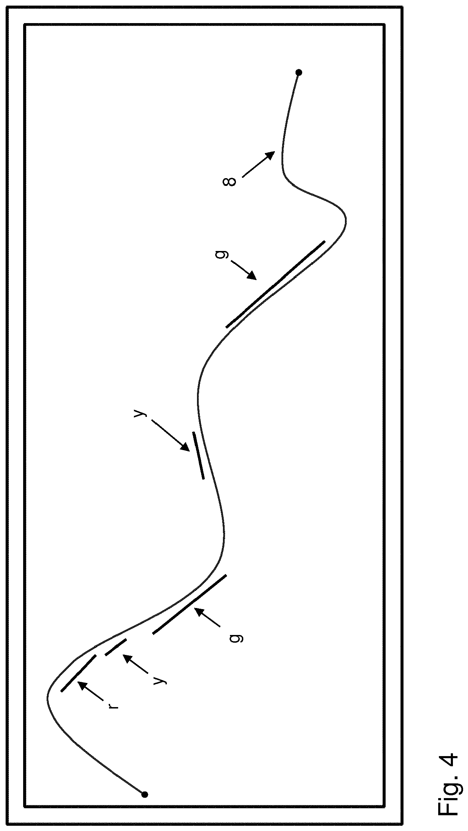

**Fig. 4** illustrates a schematic view of an exemplifying alternative predicted bandwidth capacity visualization according to embodiments of the disclosure. The example shown in Fig. 4 is similar to that of Fig. 2, with the exception that the different types of markings 9 of Fig. 2 in Fig. 4 is replaced by different colours, here differently colored lines; **red r** for predicted relatively low bandwidth capacity, **yellow y** for predicted relative medium bandwidth capacity, and **green g** for predicted relatively high bandwidth capacity. The shown example of Fig. 4 may represent how e.g. a taxi driver may select route based on customer needs, such as phone call only, teleconference, downloading information etc. Here, the mapped route 8 is selected, reflecting the first route illustrated in Fig. 1.

**Fig. 5** is a flowchart depicting an exemplifying method performed by a vehicle route assessing system 1 according to embodiments of the disclosure. Said method is for assessing one or more navigation routes 3, 4 of a vehicle 2 in consideration of cellular and/or non-cellular communication of an Internet connection system 21 of said vehicle 2. The exemplifying method, which may be continuously repeated, comprises the following actions discussed with support from Figs. 1-4.

### Action 1001

In Action 1001, the vehicle route assessing system 1 determines - e.g. by means of the routes determining unit 101 - with support from a navigation system 22 of the vehicle 2, one or more potential vehicle navigation routes 3, 4 from a start position 31 to a target position 32. Thus, as shown with support from at least Figs. 1 and 3, there is calculated one or more potential routes 3, 4 for how the vehicle 2 may drive from a start position 31 to a target position 32.

### Action 1002

In Action 1002, the vehicle route assessing system 1 determines - e.g. by means of the bandwidth capacity determining unit 102 - with support from a remote vehicles management system 5 supporting communication with one or more vehicles 6, respective predicted bandwidth capacity available to the Internet connection system 21 along one or more route sections 35 of the one or more potential routes 3, 4, which respective predicted bandwidth capacity is based on statistical bandwidth data derived from previous data 7 gathered by the remote vehicles management system 5, which previous data 7 indicates previous bandwidth capacities experienced by Internet connection systems of vehicles 6 having previously been positioned along, and/or in vicinity of, the one or more route sections 35. Thus, as shown with support from at least Figs. 1 and 3, there is predicted amount of bandwidth available to the vehicle Internet connection system 21 along the potential routes 3, 4 based on previous bandwidth capacity experiences by vehicle Internet connection systems along and/or near the potential routes 3, 4 communicated via the remote vehicles management system 5. Accordingly, it may with support from the vehicles management system 5 having gathered bandwidth statistics from one or more vehicles 6 previously having been positioned along and/or in vicinity of the potential navigation routes 3, 4, be assessed how bandwidth capacity predicted to be available to the Internet connection system 21 along said routes 3, 4 may vary along different route sections 35 of the respective potential routes 3, 4. Consequently, based on the statistical bandwidth data derived from the previous data 7 collected and potentially processed by the vehicles management system 5, it may be analysed how predicted bandwidth capacity for one route section 351 of e.g. a first potential route 3 may differ from predicted bandwidth capacity for another route section 352 of said first potential route 3. Subsequently, based on said statistical bandwidth data derived from the previous data 7 collected and potentially processed by the vehicles management system 5, it may hence further be analysed how predicted bandwidth capacity along route sections 35 of said first potential route 3 may differ from predicted bandwidth capacity along route sections of a second potential route 4, etc. Thus, relevant previous bandwidth data 7 may accordingly be gathered by the vehicles management system 5 in an efficient manner, which data 7 subsequently may be utilized for predicting future bandwidth capacities along different potential routes 3, 4.

Optionally, the previous data may comprise information of time of day, day of week and/or date. Thus, as shown with support from at least Figs. 1 and 3, the previous data 7 relating to bandwidth availability gathered by the vehicles management system 5 from Internet connection systems of one or more vehicles 6 having previously been positioned along, and/or in the vicinity of, one or more route sections 35, is - in addition to indicating experienced bandwidth capacity and geographical vehicle position associated therewith - time-stamped, and/or indicate a time factor. Accordingly, the previous data 7 then reflects at what time, day and/or date a bandwidth capacity for a previous vehicle 6 was measured, which may be of relevance since the bandwidth capacity may vary therewith.

Optionally, Action 1002 of determining respective predicted bandwidth capacity, may comprise determining respective predicted bandwidth capacity along one or more route sections 35 of the one or more potential routes 3, 4, taking into account time of day, day of week and/or date. Thus, as shown with support from at least Figs. 1 and 3, there is predicted amount of bandwidth available to the vehicle Internet connection system 21 along the potential routes 3, 4 at a specific time of day, day of week and/or date based on previous bandwidth capacity experiences by vehicle Internet connection systems at the same, corresponding, and/or similar time of day, day of week and/or date along and/or near the potential routes 3, 4 communicated via the remote vehicles management system 5. Accordingly, it may with support from the vehicles management support system 5 having gathered bandwidth statistics from one or more vehicles 6 previously having been positioned along and/or in vicinity of the potential navigation routes 3, 4, be assessed how bandwidth capacity predicted to be available to the Internet connection system 21 along said routes 3, 4 may vary along different route sections 35 of the respective potential routes 3, 4 taking into account time of day, day of week and/or date when the vehicle 2 is predicted, calculated and/or determined to potentially be positioned at and/or along the different route sections 35. Predicted bandwidth capacity for a route section 35 may thus vary depending on when the vehicle 2 is predicted to be positioned at and/or along said route section 35. That is, predicted bandwidth capacity for a route section 35, at e.g. a first time of day, day of week and/or date, may hence differ from predicted bandwidth capacity for said route section 35 at a second time of day, day of week and/or date, etc. Consequently, upon determining respective predicted bandwidth capacity along one or more route sections 35, a time-dependent criteria and/or time factor is considered, for instance whether it is rush hour, weekday or weekend, and/or a national holiday.

### Action 1003

In optional Action 1003, the vehicle route assessing system 1 may suggest - e.g. by means of the optional route suggesting unit 103 - out of the one or more potential routes 3, 4, at least a first route 3 determined to be favourable in view of predicted bandwidth capacity available to the Internet connection system 21. Thus, as shown with support from at least Figs. 1 and 3, a route 3 is favoured which is deemed to have good and/or the best possible bandwidth capacity for the Internet connection system 21 from the start position 31 to the target position 32. Subsequently, a route 3 is favoured which is deemed to be preferred in view of user experience for one or more vehicle occupants utilizing electronic user devices connected to the vehicle Internet connection system 21, when traveling from the start position 31 to the target position 32. Selecting which potential route(s) 3, 4 that is considered favourable may depend on different parameters, such as e.g. the suggested route 3 comprising one or more route sections 353, 355 with the highest predicted bandwidth capacity as compared to route sections of other potential routes 4, and/or the route 3 and/or the route sections 35 comprising the highest percentage of relatively high and/or acceptable - such as above a threshold limit - predicted bandwidth capacity, etc., or a combination thereof.

### Action 1004

In optional Action 1004, the vehicle route assessing system 1 may visualize - e.g. by means of the optional capacity visualizing unit 104 - with support from a digital map 222 of a display 221 of the navigation system 22, a mapped route 8 reflecting the first route 3, wherein along the mapped route 8, the predicted bandwidth capacity available to the Internet connection system 21 for the one or more route sections 35 along the first route 3, is visualized. Thus, as shown with support from Figs. 1-4, there is displayed a route 8 on the navigation system display 221 representing the suggested first route 3, along which mapped route 8 there is further displayed predicted bandwidth capacity and/or capacities for the different route sections 35 of the first route 3. Accordingly, bandwidth capacities predicted to be available to the Internet connection system 21 along the first route 3 are hence visualized in an intuitive manner along the mapped route 8, and a potential vehicle occupant may hence easily comprehend what bandwidth capacity is predicted to be available where along the suggested first route 3.

Optionally, the predicted bandwidth capacity of the first route 3 may be visualized by displaying different colours r, y, g and/or types of markings 9 along the mapped route 8 for route sections 35 having different levels of predicted bandwidth capacity. Thus, as shown with support from Figs. 1-4, the different bandwidth capacities predicted to be available to the Internet connection system 21 along different sections 35 of the suggested first route 3 are hence visualized in an intuitive manner along the mapped route 8 in that different predicted bandwidth capacity is represented by different colours r, y, g and/or types of markings 91, 92, 93, and a potential vehicle occupant may hence easily comprehend what bandwidth capacity is predicted to be available where along said first route 3. That is, the predicted bandwidth capacities may be categorized into different capacity categories, e.g. by being predicted to reach different predetermined levels of bandwidth capacity and/or belong to predetermined different ranges of bandwidth capacity. Such levels and/or ranges may be arbitrarily selected, as deemed suitable and/or feasible. The different bandwidth capacity categories may then accordingly be represented by different colours r, y, g and/or types of markings 91, 92, 93 along the mapped route.

### Action 1005

In optional Action 1005, the vehicle route assessing system 1 may visualize - e.g. by means of the optional warning visualizing unit 105 - a warning indication (not shown) upon the vehicle 2 approaching a route section 351 of the first route 3 having a predicted bandwidth capacity below a predetermined level threshold, which warning indication is visualized in association with a segment 851 of the mapped route 8 reflecting that route section 351. Thus, as shown with support from Figs. 1-4, when the vehicle 2 is nearing a segment and/or section 351 of the selected first route 3 having a predicted bandwidth capacity below a level under which the bandwidth capacity is deemed unsatisfying and/or insufficient, a heads-up is provided in an intuitive manner in that said warning indication is displayed in relation to a segment and/or section 851 of the mapped route 8 on the navigation display 221 corresponding to the section 351 of the first route 3 having the predicted low - e.g. insufficient - bandwidth capacity. Subsequently, a potential vehicle occupant may hence easily comprehend when the bandwidth capacity is about to go below a level where streaming on - and/or internet dependent applications being run on - user devices connected to the Internet connection system 21, may function unsatisfying or not at all. The warning indication may be visualized in any arbitrary manner deemed intuitive, e.g. by means of a text message, and/or e.g. by means of one or more signs and/or symbols in an intuitive manner signaling "warning". The warning indication may further be visualized on the navigation display 221 such that there is a visual connection from the warning indication to the segment 851 of the mapped route 8 reflecting the route section 351 with the predicted bandwidth capacity below the predetermined threshold. Moreover, the warning indication may be visualized and/or provided a predetermined period of time prior to - and/or a predetermined distance before - the vehicle 2 is estimated to reach the route section 351 having a predicted bandwidth capacity below the predetermined level threshold.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a vehicle route assessing system (1) for assessing one or more navigation routes of a vehicle (2) in consideration of cellular and/or non-cellular communication of an Internet connection system (21) of said vehicle (2), said method comprising:
***determining*** (1001) with support from a navigation system (22) of said vehicle (2), one or more potential vehicle navigation routes (3, 4) from a start position (31) to a target position (32);
***determining*** (1002) respective predicted bandwidth capacity available to said Internet connection system (21) along one or more route sections (35) of the one or more potential routes (3, 4), said respective predicted bandwidth capacity being based on statistical bandwidth data derived from previous data (7) gathered by a remote vehicles management system (5) supporting communication with one or more vehicles (6), said previous data (7) indicating previous bandwidth capacities experienced by Internet connection systems of vehicles (6) having previously been positioned along, or in vicinity of, said one or more route sections (35);
***suggesting*** (1003) out of said one or more potential routes (3, 4), at least a first route (3) determined to be favourable in view of predicted bandwidth capacity available to said Internet connection system (21);
***visualizing*** (1004) with support from a digital map (222) of a display (221) of said navigation system (22), a mapped route (8) reflecting said first route (3), wherein along said mapped route (8), the predicted bandwidth capacity available to said Internet connection system (21) for the one or more route sections (35) along said first route (3), is visualized;
the method being **characterised in that** it further comprises the step of:
***visualizing*** (1005) a warning indication upon said vehicle (2) approaching a route section (351) of said first route (3) having a predicted bandwidth capacity below a predetermined level threshold, wherein said warning indication is visualized in association with a segment (851) of said mapped route (8) reflecting said route section (351).

2. The method according to claim 1, wherein said previous data (7) comprises information of time of day, day of week and/or date.

3. The method according to claim 2, wherein said *determining* respective predicted bandwidth capacity comprises determining respective predicted bandwidth capacity along one or more route sections of the one or more potential routes, taking into account time of day, day of week and/or date.

4. The method according to any one of claims 1-3, wherein said predicted bandwidth capacity of the first route (3) is visualized by displaying different colours (r, y, g) and/or types of markings (91, 92, 93) along said mapped route (8) for route sections (351, 352, 353) having different levels of predicted bandwidth capacity.

5. A **vehicle route assessing system** (1) for assessing one or more navigation routes of a vehicle (2) in consideration of cellular and/or non-cellular communication of an Internet connection system (21) of said vehicle (2), said vehicle route assessing system (1) comprising:
a **routes determining unit** (101) for ***determining*** (1001) with support from a navigation system (22) of said vehicle (2), one or more potential vehicle navigation routes (3, 4) from a start position (31) to a target position (32);
a **bandwidth capacity determining unit** (102) for ***determining*** (1002) respective predicted bandwidth capacity available to said Internet connection system (21) along one or more route sections (35) of the one or more potential routes (3, 4), said respective predicted bandwidth capacity being based on statistical bandwidth data derived from previous data (7) gathered by a remote vehicles management system (5) supporting communication with one or more vehicles (6), said previous data (7) indicating previous bandwidth capacities experienced by Internet connection systems of vehicles (6) having previously been positioned along, or in vicinity of, said one or more route sections (35);
a **route suggesting unit** (103) for ***suggesting*** (1003) out of said one or more potential routes (3, 4), at least a first route (3) determined to be favourable in view of predicted bandwidth capacity available to said Internet connection system (21);
a **capacity visualizing unit** (104) for ***visualizing*** (1004) with support from a digital map (222) of a display (221) of said navigation system (22), a mapped route (8) reflecting said first route (3), wherein along said mapped route (8), the predicted bandwidth capacity available to said Internet connection system (21) for the one or more route sections (35) along said first route (3), is visualized; the system being **characterised in that** it further comprises:
a **warning visualizing unit** (105) adapted for ***visualizing*** (1005) a warning indication upon said vehicle (2) approaching a route section (351) of said first route (3) having a predicted bandwidth capacity below a predetermined level threshold, wherein said warning indication is visualized in association with a segment (851) of said mapped route (8) reflecting said route section (351).

6. The vehicle route assessing system (1) according to claim 5, wherein said previous data (7) comprises information of time of day, day of week and/or date.

7. The vehicle route assessing system (1) according to claim 6, wherein said bandwidth capacity determining unit (102) further is adapted for determining respective predicted bandwidth capacity along one or more route sections of the one or more potential routes, taking into account time of day, day of week and/or date.

8. The vehicle route assessing system (1) according to any one of claims 5-7,
wherein said capacity visualizing unit (104) further is adapted such that said predicted bandwidth capacity of the first route (3) is visualized by displaying different colours (r, y, g) and/or types of markings (91, 92, 93) along said mapped route (8) for route sections (351, 352, 353) having different levels of predicted bandwidth capacity.

9. A **vehicle** (2) comprising a vehicle route assessing system (1) according to any one of claims 5-8.

## Patentansprüche

1. Verfahren, das von einem Fahrzeugrouten-Bewertungssystem (1) durchgeführt wird, um eine oder mehrere Navigationsrouten eines Fahrzeugs (2) unter Berücksichtigung der zellularen und/oder nicht-zellularen Kommunikation eines Internet-Verbindungssystems (21) des Fahrzeugs (2) zu bewerten, wobei das Verfahren Folgendes umfasst:
Bestimmen (1001), mit Unterstützung eines Navigationssystems (22) des Fahrzeugs (2), einer oder mehrerer möglicher Fahrzeugnavigationsrouten (3, 4) von einer Startposition (31) zu einer Zielposition (32):
Bestimmen (1002) der jeweiligen vorhergesagten Bandbreitenkapazität, die dem Internet-Verbindungssystem (21) entlang eines oder mehrerer Routenabschnitte (35) der einen oder mehreren potenziellen Routen (3, 4) zur Verfügung steht, wobei die jeweilige vorhergesagte Bandbreitenkapazität auf statistischen Bandbreitendaten basiert, die aus früheren Daten (7) abgeleitet werden, die von einem entfernten Fahrzeugmanagementsystem (5) gesammelt werden, das die Kommunikation mit einem oder mehreren Fahrzeugen (6) unterstützt, wobei die vorherigen Daten (7) frühere Bandbreitenkapazitäten anzeigen, die von Internet-Verbindungssystemen von Fahrzeugen (6) erfahren wurden, die zuvor entlang oder in der Nähe des einen oder der mehreren Routenabschnitte (35) positioniert waren;
Vorschlagen (1003) von mindestens einer ersten Route (3) aus der einen oder den mehreren potenziellen Routen (3, 4), die im Hinblick auf die vorhergesagte Bandbreitenkapazität, die dem Internet-Verbindungssystem (21) zur Verfügung steht, als vorteilhaft bestimmt wurde;
Visualisieren (1004), mit Unterstützung von einer digitalen Karte (222) auf einem Display (221) des Navigationssystems (22), einer kartierten Route (8), die die erste Route (3) widerspiegelt,
wobei entlang der kartierten Route (8) die vorhergesagte Bandbreitenkapazität, die dem Internet-Verbindungssystem (21) für den einen oder mehrere Routenabschnitte (35) entlang der ersten Route (3) zur Verfügung steht, visualisiert wird;
wobei das Verfahren **dadurch gekennzeichnet ist, dass** es außerdem den folgenden Schritt umfasst:
Visualisieren (1005) einer Warnanzeige, wenn sich das Fahrzeug (2) einem Routenabschnitt (351) der ersten Route (3) nähert, der eine vorhergesagte Bandbreitenkapazität unterhalb eines vorbestimmten Schwellenwertes aufweist,
wobei die Warnanzeige in Verbindung mit einem Segment (851) der kartierten Route (8) visualisiert wird, das den Routenabschnitt (351) wiedergibt.

2. Verfahren gemäß Anspruch 1,
wobei die vorherigen Daten (7) Informationen über die Tageszeit, den Wochentag und/oder das Datum umfassen.

3. Verfahren nach Anspruch 2,
wobei das Bestimmen der jeweiligen vorhergesagten Bandbreitenkapazität das Bestimmen der jeweiligen vorhergesagten Bandbreitenkapazität entlang eines oder mehrerer Routenabschnitte der einen oder mehreren potenziellen Routen unter Berücksichtigung der Tageszeit, des Wochentags und/oder des Datums umfasst.

4. Verfahren gemäß einem der Ansprüche 1-3,
wobei die vorhergesagte Bandbreitenkapazität der ersten Route (3) durch Anzeigen verschiedener Farben (r, y, g) und/oder Arten von Markierungen (91, 92, 93) entlang der kartierten Route (8) für Routenabschnitte (351, 352, 353) mit verschiedenen Niveaus der vorhergesagten Bandbreitenkapazität visualisiert wird.

5. Fahrzeugrouten-Bewertungssystem (1) zum Bewerten einer oder mehrerer Navigationsrouten eines Fahrzeugs (2) unter Berücksichtigung der zellularen und/oder nicht-zellularen Kommunikation eines Internet-Verbindungssystems (21) des Fahrzeugs (2), wobei das Fahrzeugrouten-Bewertungssystem (1) Folgendes umfasst:
eine Routenbestimmungseinheit (101) zum Bestimmen (1001), mit Unterstützung eines Navigationssystems (22) des Fahrzeugs (2), einer oder mehrerer möglicher Fahrzeugnavigationsrouten (3, 4) von einer Startposition (31) zu einer Zielposition (32);
eine Bandbreitenkapazitäts-Bestimmungseinheit (102) zum Bestimmen (1002) der jeweiligen vorhergesagten Bandbreitenkapazität, die für das Internet-Verbindungssystem (21) entlang eines oder mehrerer Routenabschnitte (35) der einen oder mehreren potenziellen Routen (3, 4) verfügbar ist, wobei die jeweilige vorhergesagte Bandbreitenkapazität auf statistischen Bandbreitendaten basiert, die von früheren Daten (7) abgeleitet sind, die von einem entfernten Fahrzeugmanagementsystem (5) gesammelt wurden, das die Kommunikation mit einem oder mehreren Fahrzeugen (6) unterstützt, wobei die früheren Daten (7) frühere Bandbreitenkapazitäten anzeigen, die von Internet-Verbindungssystemen von Fahrzeugen (6) erfahren wurden, die zuvor entlang oder in der Nähe des einen oder der mehreren Routenabschnitte (35) positioniert waren;
eine Routenvorschlagseinheit (103) zum Vorschlagen (1003) von einer oder mehreren potentiellen Routen (3, 4), mindestens einer ersten Route (3), die im Hinblick auf die vorhergesagte Bandbreitenkapazität, die dem Internet-Verbindungssystem (21) zur Verfügung steht, als günstig bestimmt wurde;
eine Kapazitätsvisualisierungseinheit (104) zum Visualisieren (1004), mit Unterstützung einer digitalen Karte (222) eines Displays (221) des Navigationssystems (22), einer kartierten Route (8), die die erste Route (3) widerspiegelt,
wobei entlang der kartierten Route (8) die vorhergesagte Bandbreitenkapazität, die dem Internet-Verbindungssystem (21) für den einen oder die mehreren Routenabschnitte (35) entlang der ersten Route (3) zur Verfügung steht, visualisiert wird;
wobei das Verfahren **dadurch gekennzeichnet ist, dass** es ferner Folgendes umfasst:
eine Warnungsvisualisierungseinheit (105), die dazu ausgelegt ist, eine Warnanzeige zu visualisieren (1005), wenn sich das Fahrzeug (2) einem Routenabschnitt (351) der ersten Route (3) nähert, der eine vorhergesagte Bandbreitenkapazität unterhalb eines vorbestimmten Pegelschwellenwerts aufweist,
wobei die Warnanzeige in Verbindung mit einem Segment (851) der kartierten Route (8) visualisiert wird, das den Routenabschnitt (351) wiedergibt.

6. Fahrzeugrouten-Bewertungssystem (1) nach Anspruch 5,
wobei die vorherigen Daten (7) Informationen über die Tageszeit, den Wochentag und/oder das Datum umfassen.

7. Fahrzeugrouten-Bewertungssystem (1) nach Anspruch 6,
wobei die Bandbreitenkapazitäts-Bestimmungseinheit (102) ferner geeignet ist, die jeweilige vorhergesagte Bandbreitenkapazität entlang eines oder mehrerer Routenabschnitte der einen oder mehreren potenziellen Routen unter Berücksichtigung der Tageszeit, des Wochentags und/oder des Datums zu bestimmen.

8. Fahrzeugrouten-Bewertungssystem (1) nach einem der Ansprüche 5-7,
wobei die Kapazitätsvisualisierungseinheit (104) ferner so angepasst ist, dass die vorhergesagte Bandbreitenkapazität der ersten Route (3) durch Anzeigen verschiedener Farben (r, y, g) und/oder Arten von Markierungen (91, 92, 93) entlang der kartierten Route (8) für Routenabschnitte (351, 352, 353) mit verschiedenen Niveaus der vorhergesagten Bandbreitenkapazität visualisiert wird.

9. Fahrzeug (2) mit einem Fahrzeugrouten-Bewertungssystem (1) nach einem der Ansprüche 5-8.

## Revendications

1. Procédé exécuté par un système d'évaluation d'itinéraire de véhicule (1) pour évaluer un ou plusieurs itinéraires de navigation d'un véhicule (2) en tenant compte de la communication cellulaire et/ou non cellulaire d'un système de connexion Internet (21) dudit véhicule (2), ledit procédé comprenant les étapes suivantes :
déterminer (1001) avec le soutien d'un système de navigation (22) dudit véhicule (2), un ou plusieurs itinéraires potentiels de navigation du véhicule (3, 4) depuis une position de départ (31) jusqu'à une position cible (32) ;
déterminer (1002) une capacité de bande passante prédite respective disponible pour ledit système de connexion Internet (21) le long d'une ou plusieurs sections d'itinéraire (35) des un ou plusieurs itinéraires potentiels (3, 4), ladite capacité de bande passante prédite respective étant basée sur des données statistiques de bande passante dérivées de données antérieures (7) recueillies par un système de gestion de véhicules à distance (5) prenant en charge la communication avec un ou plusieurs véhicules (6), lesdites données antérieures (7) indiquant les capacités antérieures de la bande passante rencontrées par les systèmes de connexion Internet des véhicules (6) ayant précédemment été positionnés le long ou à proximité desdites une ou plusieurs sections d'itinéraire (35) ;
suggérer (1003) parmi lesdits un ou plusieurs itinéraires potentiels (3, 4), au moins un premier itinéraire (3) déterminé comme étant favorable au vu de la capacité de bande passante prédite disponible pour ledit système de connexion Internet (21) ;
visualiser (1004), avec l'aide d'une carte numérique (222) d'un écran (221) dudit système de navigation (22), un itinéraire cartographie (8) reflétant ledit premier itinéraire (3), où, le long dudit itinéraire cartographie (8), la capacité de bande passante prédite disponible pour ledit système de connexion Internet (21) pour les une ou plusieurs sections d'itinéraire (35) le long dudit premier itinéraire (3), est visualisée ;
le procédé étant **caractérisé en ce qu'**il comprend en outre l'étape suivante :
visualiser (1005) une indication d'avertissement lorsque ledit véhicule (2) s'approche d'une section d'itinéraire (351) dudit premier itinéraire (3) ayant une capacité de bande passante prédite inférieure à un seuil de niveau prédéterminé, où ladite indication d'avertissement est visualisée en association avec un segment (851) dudit itinéraire cartographie (8) reflétant ladite section d'itinéraire (351).

2. Procédé selon la revendication 1, dans lequel lesdites données précédentes (7) comprennent des informations d'heure du jour, de jour de la semaine et/ou de date.

3. Procédé selon la revendication 2, dans lequel ladite détermination de la capacité de bande passante prédite respective comprend la détermination de la capacité de bande passante prédite respective le long d'une ou plusieurs sections d'itinéraire des un ou plusieurs itinéraires potentiels, en tenant compte de l'heure du jour, du jour de la semaine et/ou de la date.

4. Procédé selon l'une quelconque des revendications 1 à 3, dans lequel ladite capacité de bande passante prédite du premier itinéraire (3) est visualisée en affichant différentes couleurs (r, y, g) et/ou différents types de marquages (91, 92, 93) le long dudit itinéraire cartographie (8) pour les sections d'itinéraire (351, 352, 353) ayant différents niveaux de capacité de bande passante prédite.

5. Système d'évaluation d'itinéraire de véhicule (1) permettant d'évaluer un ou plusieurs itinéraires de navigation d'un véhicule (2) en tenant compte de la communication cellulaire et/ou non cellulaire d'un système de connexion Internet (21) dudit véhicule (2), ledit système d'évaluation d'itinéraire de véhicule (1) comprenant :
une unité de détermination d'itinéraires (101) pour déterminer (1001), avec le soutien d'un système de navigation (22) dudit véhicule (2), un ou plusieurs itinéraires potentiels de navigation du véhicule (3, 4) depuis une position de départ (31) jusqu'à une position cible (32) ;
une unité de détermination de capacité de bande passante (102) pour déterminer (1002) la capacité de bande passante prédite respective disponible pour ledit système de connexion Internet (21) le long d'une ou de plusieurs sections d'itinéraire (35) des un ou plusieurs itinéraires potentiels (3, 4), ladite capacité de bande passante prédite respective étant basée sur des données statistiques de bande passante dérivées de données antérieures (7) recueillies par un système de gestion de véhicules à distance (5) prenant en charge la communication avec un ou plusieurs véhicules (6), lesdites données antérieures (7) indiquant les capacités antérieures de bande passante rencontrées par les systèmes de connexion Internet des véhicules (6) ayant été précédemment positionnés le long, ou à proximité, desdites une ou plusieurs sections d'itinéraire (35) ;
une unité de suggestion d'itinéraire (103) pour suggérer (1003) parmi lesdits un ou plusieurs itinéraires potentiels (3, 4), au moins un premier itinéraire (3) déterminé comme étant favorable au vu de la capacité de bande passante prédite disponible pour ledit système de connexion Internet (21) ;
une unité de visualisation de capacité (104) pour visualiser (1004), avec l'aide d'une carte numérique (222) d'un écran (221) dudit système de navigation (22), un itinéraire cartographie (8) reflétant ledit premier itinéraire (3), où, le long dudit itinéraire cartographie (8), la capacité de bande passante prédite disponible pour ledit système de connexion Internet (21) pour les une ou plusieurs sections d'itinéraire (35) le long dudit premier itinéraire (3), est visualisée ;
le système étant **caractérisé en ce qu'**il comprend en outre :
une unité de visualisation d'avertissement (105) adaptée pour visualiser (1005) une indication d'avertissement lorsque ledit véhicule (2) s'approche d'une section d'itinéraire (351) dudit premier itinéraire (3) ayant une capacité de bande passante prédite inférieure à un seuil de niveau prédéterminé, ladite indication d'avertissement étant visualisée en association avec un segment (851) dudit itinéraire cartographie (8) reflétant ladite section d'itinéraire (351).

6. Système d'évaluation d'itinéraire de véhicule (1) selon la revendication 5, dans lequel lesdites données précédentes (7) comprennent des informations d'heure du jour, de jour de la semaine et/ou de date.

7. Système d'évaluation d'itinéraire de véhicule (1) selon la revendication 6, dans lequel ladite unité de détermination de capacité de bande passante (102) est en outre adaptée pour déterminer la capacité de bande passante prédite respective le long d'une ou de plusieurs sections d'itinéraire des un ou plusieurs itinéraires potentiels, en tenant compte de l'heure du jour, du jour de la semaine et/ou de la date.

8. Système d'évaluation d'itinéraire de véhicule (1) selon l'une quelconque des revendications 5 à 7, dans lequel ladite unité de visualisation de capacité (104) est en outre adaptée de manière à ce que ladite capacité de bande passante prédite du premier itinéraire (3) soit visualisée en affichant différentes couleurs (r, y, g) et/ou différents types de marquages (91, 92, 93) le long dudit itinéraire cartographie (8) pour les sections d'itinéraire (351, 352, 353) ayant différents niveaux de capacité de bande passante prédite.

9. Véhicule (2) comprenant un système d'évaluation d'itinéraire de véhicule (1) selon l'une quelconque des revendications 5 à 8.
